# EUROPEAN PATENT APPLICATION

(11) **EP 3 878 922 A1**
(43) Date of publication of application: **15.09.2021**
(21) Application number: 21158636.7
(22) Date of filing: 08.06.2017
(51) Int. Cl.: C09K 5/06, D07B 1/16, F28D 20/02, H01B 3/44, B60H 1/00, D07B 1/14

(54) **HEAT STORAGE CABLE INCLUDING CLOSING SYSTEM**

(30) Priority: 09.06.2016 US 201662347735 P
(62) Divisional of application: 17737087.1
(71) Applicant: E. I. du Pont de Nemours and Company, Wilmington, DE 19805 (US)
(72) Inventor: ROLLAND, Loic Pierre, 01220 Divonne Les Bains (FR)
(74) Representative: Heinemann, Monica

(57) **Abstract**

The present invention relates to the field of Phase Change Material (PCM) for thermal management in different applications like for example automotive, building, packaging, garments and footwear. The cable of the present invention comprises at least two sections wherein a first section A of the cable comprises a core, a PCM layer surrounding the core and one or more layer(s) of a protective polymer surrounding the PCM layer and a section B comprising a core, a thermoplastic polymer layer and one or more layer(s) of a protective polymer surrounding the thermoplastic polymer layer wherein the PCM layer consists of a PCM composition; the core consists of a filament, yarn, strand or wire made of a natural or synthetic polymeric material or a metal; and the thermoplastic polymer layer consists of a thermoplastic polymer composition.

## Description

### FIELD OF THE INVENTION

The present invention relates to the field of Phase Change Material (PCM) for thermal management in different applications like for example automotive, construction industries, building, packaging, garments and footwear. In particular, the present invention relates to cables comprising at least two sections where one section comprises a Phase Change Material and a second section being a closing system, the process of making thereof and their use in applications such as automotive or construction industries.

### BACKGROUND OF THE INVENTION

Several patents and publications are cited in this description in order to more fully describe the state of the art to which this invention pertains. The entire disclosure of each of these patents and publications is incorporated by reference herein.

Phase Change Materials (PCM) are latent thermal storage materials that are capable of absorbing and releasing high amounts of latent heat during melting and crystallization, respectively. The thermal energy transfer occurs when a material is transformed from a solid to a liquid phase or from a liquid to a solid phase. During such phase change, the temperature of the PCM material remains nearly constant, the heat flowing through the PCM being "entrapped" within the PCM itself. Among well-known PCM, paraffin is frequently used as PCM because of its good thermal performance, low chemical reactivity and low toxicity.

PCM can be introduced in matrices made of different materials or applied to a coating. See, e.g., U.S. 4,003,426, U.S. 4,528,328, U.S. 5,053,446, U.S. 2006/0124892 (WO 2006/062610), WO 98/04644, and WO 2004/044345.

In order to conveniently use the PCM in thermal management applications, the PCM have been for instance incorporated into matrix polymers that absorb and retain the phase change materials, even at temperatures above the melting point of the PCM, thus making it possible to manufacture the resulting PCM composite materials into slabs, panels or other shapes according to the needs of the specific applications. However, most matrix polymers suffer from multiple drawbacks such as limited PCM absorption capacity, and substantial loss of PCM by exudation during lifetime. A partial solution to the above problems has been proposed in WO 2006/062610, WO 2011/143278 and WO 2011/014636.

However, there is still a need for PCM containing materials that will provide high heat storage capacity, high surface contact for optimum thermal exchange, that will be resistant to temperatures from -20°C to 130°C under permanent exposure to air but also to chemicals, in particular to lubricating oil and/or to ethylene glycol, that will remain efficient with time and that will provide high thermal conductivity. A partial solution has been provided in WO2015/168096 where a cable comprising a core and a PCM layer is disclosed. However, there is still a need for providing such cables with suitable closing system.

### SUMMARY OF THE INVENTION

The present invention is directed to a cable having at least two sections wherein a first section A of the cable includes a PCM core surrounded by one or more layer(s) of a protective polymer and a section B comprising a thermoplastic polymer core, most commonly defined as plugs and/or welds in the absence of plugs, and one or more layer(s) of a protective polymer surrounding the thermoplastic polymer core Section A and section B are alternately positioned so that when the cable is cut into pieces , at the location of these plugs or welds, the PCM core cannot discharge when in liquid form.

In a first embodiment, the aim has been achieved with the cables described herein wherein the cables comprise at least two sections wherein a first section A of the cable comprises a core, a PCM layer surrounding the core and one or more layer(s) of a protective polymer surrounding the PCM layer and a section B comprising a core, a thermoplastic polymer layer and one or more layer(s) of a protective polymer surrounding the thermoplastic polymer layer wherein
a) the PCM layer consists of a PCM composition,
b) the core consists of a filament, yarn, strand or wire made of a natural or synthetic polymeric material or a metal, and
the thermoplastic polymer layer consists of a thermoplastic polymer composition.

Preferably, the PCM composition of the present invention has a latent heat between 100 and 300 J/g

Preferably, the cables of the present invention have more than two sections and are made of alternating sections A and B.

In a preferred embodiment, sections B are present at both end of the cables of the present invention.

In another preferred embodiment, the core is the same in section A and in section B and the one or more layer(s) of a protective polymer surrounding the PCM layer and the thermoplastic polymer layer is the same in section A and in section B in the cables of the present invention.

In another preferred embodiment, the length of section A is longer than the length of section B in the cables of the present invention.

In a preferred embodiment, the PCM composition comprises paraffin waxes, fatty acids, fatty acids esters or a combination thereof and optionally an ethylene copolymer. Preferably, the fatty acid ester is an ester of 1,3-propanediol, and the optional ethylene copolymer is ethylene vinyl acetate (EVA).

Preferably, the filament, yarn, strand or wire of the core of the cables of the present invention is made of polyamide or polyparaphenylene terephtalamide (para-aramid). More preferably, the core is a polyamide filament.

In another embodiment, the cables of the present invention further comprise one or more layer(s) of a protective polymer. Preferably the cables of the present invention comprise one layer of a protective polymer. Preferably, the protective polymer is made of a blend of ionomer and polyamide. Even more preferably, the cables of the present invention comprise two layers of a protective polymer. Preferably, the first layer of protective polymer is made of a blend of ionomer and polyamide and the second layer is made of a polymer selected from the group consisting of grafted or non-grafted polypropylene homopolymer, grafted or non-grafted polypropylene copolymer, perfluoro ethylene-propylene (FEP), perfluoroalkoxy alkane (PFA), ethylene tetrafluoroethylene (ETFE) and/or ethylene acrylate rubber (AEM).

Preferably, each layer of protective polymer has a thickness of between 50 to 300 µm. More preferably, when two layers are present, the thickness is between 50 to 600 µm.

Preferably, in the cables of the present invention, the amount of PCM is at least 70 weight percent based on the total weight of the cable.

Preferred cables of the present invention have a diameter of 3 to 6 mm.

In a preferred embodiment, in the cable of the present invention, the thermoplastic polymer composition comprises a blend of ionomer and polyamide, even more preferably the thermoplastic polymer composition and the layer of protective polymer comprises a blend of polyamide and ionomer which can be the same or different. Preferably the blend of polyamide and ionomer is the same in the thermoplastic polymer composition and the layer of protective polymer. Most preferred are a blend of PA6,12 and ionomer.

Also disclosed herein is the use of the cables of the present invention in thermal management, in particular in automotive and construction industries.

### BRIEF DESCRIPTION OF THE DRAWINGS

FIG. 1 is a plan view of the extruded cable illustrating the spatial relationship of the thermoplastic polymer section B and the PCM section A.
FIG. 1A is a plan view of the "welded" extruded cable of Fig. 1 illustrating the special relationship of the thermoplastic polymer section B and the PCM section A.
FIGs 2A through 2D are consecutive plan views illustrating the process of "welding", and thereafter "cutting", at of the thermoplastic polymer section B of the extruding cable of the present invention.

### DETAILED DESCRIPTION OF THE INVENTION

### Definitions

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "acrylate" means an ester of acrylic acid with an alkyl group. Preferred in the invention are acrylates with alkyl groups having 1 to 4 carbon atoms.

As used herein, the term, the term "(meth)acrylic acid" refers to methacrylic acid and/or acrylic acid, inclusively. Likewise, the term "(meth)acrylate" means methacrylate and/or acrylate and "poly(meth)acrylate" means polymers derived from the polymerization of either or a mixture of both corresponding type of monomers.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 18 weight percent of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such. The term "copolymer" may refer to polymers that consist essentially of copolymerized units of two different monomers (a dipolymer), or that consist essentially of more than two different monomers (a terpolymer consisting essentially of three different comonomers, a tetrapolymer consisting essentially of four different comonomers, etc.).

The term "acid copolymer" refers to a polymer comprising copolymerized units of an α-olefin, an α,β-ethylenically unsaturated carboxylic acid, and optionally other suitable comonomer(s), such as an α,β-ethylenically unsaturated carboxylic acid ester.

The term "ionomer" refers to a polymer that is produced by partially or fully neutralizing an acid copolymer as described above.

The present invention is directed to a cable having at least two sections wherein a first section A of the cable includes a PCM core surrounded by one or more layer(s) of a protective polymer and a section B comprising a thermoplastic polymer core, most commonly defined as plugs and/or welds in the absence of plugs, and one or more layer(s) of a protective polymer surrounding the thermoplastic polymer core. Section A and section B are alternately positioned so that when the cable is cut into pieces , at the location of these plugs or welds, the PCM core cannot discharge when in liquid form.

The PCM composition of the present invention comprises a PCM with a latent heat between 100 and 300 J/g and optionally an ethylene copolymer.

The PCM is chosen among one or more alkyl hydrocarbons (paraffin waxes) or among fatty acids, fatty acid esters, salts of fatty acids and/or combinations of two or more thereof. Preferably, the PCM composition of the present invention comprises or consists of paraffin waxes or esters of 1,3-propanediol.

Paraffin waxes are saturated hydrocarbon mixtures and generally consist of a mixture of mostly straight-chain n-alkanes with the chemical formula CH₃-(CH₂)ₙ-CH₃. The crystallization of the -(CH₂)ₙ- chain releases a large amount of the latent heat. Both the melting point and the heat of fusion increase with increasing chain length. Therefore, it is possible to select the paraffin waxes, which are products of petroleum refining, in such a way that the phase change temperature range matches with the temperature of the operation system to which the PCM is applied.

The fatty acids, fatty acid esters, salts of fatty acids can have an origin derived from animal fat, animal grease, vegetable oil, vegetable wax, and/or combinations of two or more thereof. They can also be fully bio-based, renewable and biodegradable as described in WO08/123845 and in U.S. provisional application No. 62/250,206.

The fatty acids can be "long" chain fatty acids, both saturated and unsaturated, having tails of more than 12 carbons. Examples of such fatty acids include oleic acid, palmitic acid, linoleic acid, palmitoleic acid, stearic acid, or combinations of two or more thereof. Frequently available fatty acids can be oleic acid, palmitic acid, linoleic acid, palmitoleic acid, stearic acid and/or combinations of two or more thereof.

The fatty acid esters can be formed with alcohols, diols, and/or polyols, including, but not limited to, mono-, di- or triglycerides of glycerol, esters of pentaerythritol, polyesters of polyhydric alcohols, esters of methanol, ethanol, propanol, butanol, isobutanol, pentanol, hexanol, cyclohexanol, esters or diesters of ethylene glycol and/ or combinations of two or more thereof. Preferably, the fatty acid esters are mono-, di- or triglycerides of glycerol, and/or combinations thereof. More preferably the fatty acid esters are esters of 1,3-propanediol as described in U.S. provisional application No. 62/250,206.

Optionally, an ethylene copolymer is present in the PCM composition of the present invention. The ethylene copolymer is used in as a processing aid during the extrusion of the PCM composition. The ethylene copolymer comprises or is produced from repeat units derived from ethylene and at least one comonomer which can be vinyl acetate, acrylic acid, methacrylic acid, acrylic acid ester, methacrylic acid ester, carbon monoxide, octene, hexene, butene, 4 methyl-pentene-1, propylene, or combinations of two or more thereof such as vinyl acetate, alkyl acrylates, alkyl methacrylates, carbon monoxide, and/or combinations of two or more thereof.

Preferably, the comonomer is vinyl acetate, butyl acrylate, ethyl acrylate, methyl acrylate, and/or combinations of two or more thereof. Most preferably, the at least one polar comonomer is vinyl acetate.

The ethylene copolymer can be a copolymer of ethylene and at least about 28 %, at least about 35 %, or at least about 40 %, comonomer by weight, based on the weight of the ethylene copolymer.

Examples of ethylene copolymers include, but are not limited to, ethylene vinyl acetate copolymer (EVA), ethylene/(meth)acrylate copolymers, ethylene/alkyl (meth)acrylate copolymers, ethylene/(meth)acrylic acid copolymers, ethylene/alkyl (meth)acrylic acid copolymers, ethylene/vinyl acetate/carbon monoxyde copolymers, ethylene/butyl acrylate/ carbon monoxyde copolymers, ethylene/acrylic ester/ carbon monoxyde copolymers, ethylene-propylene copolymers, linear low density polyethylenes (LLDPE's), very low density polyethylenes (VLDPE's) and/or or combinations of two or more thereof.

EVA includes copolymers derived from the copolymerization of ethylene and vinyl acetate or the copolymerization of ethylene, vinyl acetate, and an additional comonomer. An EVA may have a melt flow rate, measured in accordance with ASTM D-1238, of from 0.1 to 60 g/10 minutes or 0.3 to 30 g/10 minutes. A mixture of two or more different EVAs may be used. Most preferably, the ethylene copolymer is ethylene vinyl acetate (EVA). Even most preferably, the ethylene copolymer is ethylene vinyl acetate comprising at least about 40 % of vinyl acetate.

The blend of PCM and ethylene copolymer can be produced by any means known to one skilled in the art. For example, when the PCM has a melting point below room temperature (i.e. below 20 to 25°C) a blend of PCM and ethylene copolymer can be produced by soaking different component(s) all together at temperatures which are slightly above the melting point of the PCM but below the melting point of the ethylene copolymer.

Soaking is a natural absorption of the molten PCM by the ethylene copolymer. The components can be mixed together in a tumble blender during a certain period of time which can vary in function of the rotational speed of the tumble blender itself for a sufficient period of time such as 1 to 10 hours or about 8 hours.

The blend of a low melting point PCM and ethylene copolymer can also be produced by melt blend extrusion whereby the components are blended at temperatures above the melting point of both the ethylene copolymer and the PCM, the thus obtained mixture being subsequently extruded into granules or directly into sheets or any other suitable form.

When the PCM has a melting point above room temperature (i.e. above 20 to 25°C) a blend of PCM and ethylene copolymer can be produced by dry blending granulates of PCM and granulates of ethylene copolymer (both being solid at room temperature).

The composition may additionally comprise from 0.01 to 20, 0.01 to 10, or 0.01 to 5, weight percent, based on the total weight of the PCM composition, of additives including plasticizers, stabilizers including viscosity stabilizers and hydrolytic stabilizers, primary and secondary antioxidants, ultraviolet ray absorbers, anti-static agents, dyes, pigments or other coloring agents, inorganic fillers, fire- retardants, lubricants, reinforcing agents such as glass fiber and flakes, synthetic (for example, aramid) fiber or pulp, foaming or blowing agents, processing aids, slip additives, antiblock agents such as silica or talc, release agents, tackifying resins, or combinations of two or more thereof. These additives are described in the Kirk Othmer Encyclopedia of Chemical Technology.

The additives may be incorporated into the composition by any known process such as by dry blending, extruding a mixture of the various constituents, the conventional masterbatch technique, or the like.

The amount of ethylene copolymer in the PCM composition is preferably lower or equal to 30 weight percent, more preferably lower or equal to 10 weight percent, based on the total weight of the PCM composition.

The cables are made by extruding the PCM composition onto a filament, yarn, strand or wire made of a natural or synthetic polymeric material or a metal such as cotton, polyester, polyamide or polyphenylene terephtalamide (aramid) and/or mixtures or blends thereof. Preferably the yarn, strand or wire is made of polyparaphenylene terephtalamide (para-aramid). Some suitable polyparaphenylene terephtalamide (para-aramid) yarns, strands or wires are commercially available from DuPont, under the trademarks Kevlar®. Even more preferably, the core is a polyamide filament.

As an alternative to filament, yarn, strand or wire, ball chain which is a type of chain consisting of small plastic beads/balls connected via lengths of plastic or metal filament or wire can be used. The balls are normally solid and are molded or attached mechanically onto the plastic or metal filament or wire.

The use of the filament, yarn, strand or wire allows proper pulling of the overall cable during extrusion process of the PCM composition.

Typically, the PCM composition is fed into a wire coating extrusion line and is extruded at a temperature above its melting point, at the desired thickness, onto a yarn, strand or wire.

One or more polymeric layer(s) are then (co)-extruded onto the cable obtained by extruding the PCM composition onto the filament, yarn, strand or wire.

When manufacturing cables comprising PCM, the amount of PCM in the cables is desirably as high as possible, because the thermal performance of the compositions may be directly proportional to the concentration of PCM contained in the composition. The amount of PCM in the cables of the present invention is at least 70 weight percent, about 70 to about 95 weight ercent or about 75 to about 85 weight percent, based on the total weight of the cable.

Sections A and B of the cables of the present invention further comprise one or more layer(s) of a protective polymer. The layer(s) of a protective polymer could be the same or different in sections A and B. Preferably, they are the same. The "bead" and protective layer of section B are preferably based on the same polymer but this is not mandatory. However, they need to be compatible with each other in order to adhere/bond well to each other during the process of making the cable. The thermoplastic layer and the protective polymer/layer are the same and cannot be different. The phrase "protective" has been used for Section A in order to recognize that the function of this layer is to protect the PCM from the surroundings while for Section B there is no PCM to protect and this layer exists to bond to the beads (therefore the wording thermoplastic layer" as distinguished from "thermoplastic core).

The layer(s) of protective polymer(s) of the present invention are intended to provide some properties to the cables such as heat resistance, chemical resistance, sealability etc... The protective polymer consists of any polymer but preferably, the protective polymer is an ionomer, a polyamide, a grafted or non-grafted polypropylene homopolymer, a grafted or non-grafted polypropylene copolymer, a perfluoro ethylene-propylene (FEP), a perfluoroalkoxy alkane (PFA), an ethylene tetrafluoroethylene (ETFE), an ethylene methylacrylate copolymer with a methyl acrylate content above 50 weight percent or mixtures or blends thereof.

In one embodiment, a layer of protective polymer is made of a blend of an ionomer and a polyamide.

In particular, the layer is made of a blend of an ionomer of an ethylene acid copolymer and a polyamide.

The ionomer of the present invention is a polymer that is produced by partially or fully neutralizing an acid copolymer as described below

Suitable ethylene acid copolymers and ionomers are described in U.S. Patent No. 7,641,965, issued to Bennison et al., for example. Briefly, however, the ethylene acid copolymer comprises copolymerized units of an α-olefin having from 2 to 10 carbon atoms and about 8 to about 30 weight percent, preferably about 15 to about 30 weight percent, more preferably about 20 to about 30 weight percent, yet more preferably about 20 to about 25 weight percent, or still more preferably about 21 to about 23 weight percent of copolymerized units of an α,β-ethylenically unsaturated carboxylic acid having 3 to 8 carbon atoms. The weight percentage is based on the total weight of the ethylene acid copolymer. Preferably, the α-olefin comprises ethylene; more preferably, the α-olefin consists essentially of ethylene. Also preferably, the α,β-ethylenically unsaturated carboxylic acid comprises acrylic acid, methacrylic acid, or a combination of acrylic acid and methacrylic acid. More preferably, the α,β-ethylenically unsaturated carboxylic acid consists essentially of acrylic acid, methacrylic acid, or a combination of acrylic acid and methacrylic acid.

The ethylene acid copolymers may further comprise copolymerized units of other comonomer(s), such as unsaturated carboxylic acids having 2 to 10, or preferably 3 to 8 carbon atoms or derivatives thereof. Suitable acid derivatives include acid anhydrides, amides, and esters. Esters are preferred derivatives. Preferably the esters are α,β-ethylenically unsaturated carboxylic acid ester comonomers and include, but are not limited to, methyl acrylate, ethyl acrylate, isopropyl acrylate, butyl acrylate and combinations thereof.

The ethylene acid copolymers may be synthesized by any suitable polymerization process. For example, the ethylene acid copolymers may be polymerized as described in U.S. Patent Nos. 3,404,134; 5,028,674; 6,500,888; and 6,518,365.

Preferably, the ethylene acid copolymer has a melt index (MI) of about 60 g/10 min or less, more preferably about 45 g/10 min or less, yet more preferably about 30 g/10 min or less, or yet more preferably about 25 g/10 min or less, or still more preferably about 10 g/10 min or less, as measured by ASTM method D1238 at 190°C and 2.16 kg.

Some suitable ethylene acid copolymer resins are commercially available from E.I. du Pont de Nemours and Company of Wilmington, DE ("DuPont"), under the trademark Nucrel®.

To obtain the ionomers, at least a portion of the carboxylic acid moieties of the ethylene acid copolymers is neutralized to form carboxylate groups. Preferably about 5 to about 90 %, more preferably about 10 to about 50 %, yet more preferably about 20 to about 50 %, or still more preferably about 20 to about 35 % of the carboxylic acid groups are neutralized, based on the total carboxylic acid content of the ethylene acid copolymers. An example of a suitable procedure for neutralizing the ethylene acid copolymers is also described in U.S. Patent No. 3,404,134.

The ionomers comprise cations as counterions to the carboxylate anions. Suitable cations include any positively charged species that is stable under the conditions in which the ionomer composition is synthesized, processed and used. Preferably, the cations are metal cations that may be monovalent, divalent, trivalent or multivalent. Combinations of two or more cations that may have different valencies, for example mixtures of Na+ and Zn2+ or mixtures of NH4+ and K+, are also suitable. The cations are more preferably monovalent or divalent metal ions. Still more preferably, the metal ions are selected from the group consisting of ions of sodium, lithium, magnesium, zinc, and potassium and combinations of two or more thereof. Still more preferably, the metal ions are selected from the group consisting of ions of sodium, ions of zinc and combinations thereof. Still more preferably, the metal ions comprise or consist essentially of sodium ions.

The ionomer preferably has a MI of about 10 g/10 min or less, more preferably about 5 g/10 min or less, or still more preferably about 3 g/10 min or less, about 1.0 g/10 min or less, about 0.5 g/10 min or less, about 0.2 g/10 min or less, or about 0.1 g/10 min or less, as measured by ASTM method D1238 at 190°C and 2.16 kg. The ionomer also preferably has a flexural modulus greater than about 40,000 psi (276 MPa), more preferably greater than about 50,000 psi (345 MPa), or still more preferably greater than about 60,000 psi (414 MPa), as measured by ASTM method D790 (Procedure A).

Some suitable ionomeric resins are commercially available from DuPont, under the trademarks Surlyn® resins.

Suitable polyamides may be chosen from semi-aromatic, aliphatic polyamides, and blends thereof having a melting temperature of from 150 to 330°C.

The polyamide may be a fully aliphatic polyamide. Fully aliphatic polyamide resins may be formed from aliphatic and alicyclic monomers such as diamines, dicarboxylic acids, lactams, aminocarboxylic acids, and their reactive equivalents. A suitable aminocarboxylic acid includes 11-aminododecanoic acid. In the context of this invention, the term "fully aliphatic polyamide resin" also refers to copolymers derived from two or more such monomers and blends of two or more fully aliphatic polyamide resins. Linear, branched, and cyclic monomers may be used.

Carboxylic acid monomers comprised in fully aliphatic polyamide resins may include, but are not limited to, aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Diamines can be chosen among diamines having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine; trimethylhexamethylene diamine and/or mixtures thereof. Suitable examples of fully aliphatic polyamide resins include PA6; PA6,6; PA4,6; PA6,10; PA6,12; PA6,14; P 6,13; PA 6,15; PA6,16; PA11; PA 12; PA10; PA 9,12; PA9,13; PA9,14; PA9,15; P 6,16; PA9,36; PA10,10; PA10,12; PA10,13; PA10,14; PA12,10; PA12,12; PA12,13; 12,14 and copolymers and blends of the same.

Preferred examples of fully aliphatic polyamide resins described herein include PA6, PA11, PA12, PA4,6, PA6,6, PA,10; PA6,12; PA10,10 and copolymers and blends of the same. Most preferred fully aliphatic polyamide resins are PA6,12 and PA12.

The layer of protective polymer comprising a blend of ionomer and polyamide may have a thickness of from 50 to 500 µm, preferably of from 50 to 250 µm, and more preferably of from 100 to 200 µm.

In another embodiment a layer of protective polymer may comprise a polymer selected from the group consisting of grafted or non-grafted polypropylene homopolymer, grafted or non-grafted polypropylene copolymer, perfluoro ethylene-propylene (FEP), perfluoroalkoxy alkane (PFA), ethylene tetrafluoroethylene (ETFE) and/or ethylene acrylate rubber (AEM).

The grafted or non-grafted polypropylene homo-polymer and grafted or non-grafted polypropylene copolymer may be obtained by grafting and/or copolymerizing the propylene polymers and/or monomers with organic functionalities including acid, anhydride and/or epoxide functionalities. Examples of the acids and anhydrides used to modify polypropylene are mono-, di- or polycarboxylic acids such as acrylic acid, methacrylic acid, maleic acid, maleic acid monoethylester, fumaric acid, fumaric acid, itaconic acid, crotonic acid, itaconic anhydride, maleic anhydride and substituted maleic anhydride, e.g. dimethyl maleic anhydride or citrotonic anhydride, nadic anhydride, nadic methyl anhydride, and tetrahydrophthalic anhydride, or combinations of two or more thereof, with maleic anhydride being preferred.

Preferred protective polymer layers comprise grafted polypropylene and grafted copolymer of propylene. Some suitable grafted polypropylene and grafted copolymer of propylene are commercially available from DuPont, under the trademarks Bynel®.

The fluoropolymer FEP (fluorinated ethylene propylene copolymer) is generally a copolymer of tetrafluoroethylene and hexafluoropropylene. Usually, FEPs comprise from 87 weight percent to 94 weight percent of tetrafluoroethylene and from 6 weight percent to 13 weight percent of hexafluoropropylene, more preferably from 88 weight percent to 90 weight percent of tetrafluoroethylene and from 10 weight percent to 12 weight percent hexafluoropropylene, all based on the total weight of the FEP.

The fluoropolymer PFA (perfluoroalkoxy copolymer) is generally a copolymer of tetrafluoroethylene and a perfluoroalkylvinylether such as perfluoropropylvinylether, perfluoroethylvinylether or perfluoromethylvinylether. Usually, PFA comprises from 90 weight percent to 98 or 99 weight percent of tetrafluoroethylene and from 1 or 2 weight percent to 10 weight percent of perfluoropropylvinylether, perfluoroethylvinylether or perfluoromethylvinylether. More preferably from 92 weight percent to 97 weight percent of tetrafluoroethylene and from 3 weight percent to 8 weight percent of perfluoropropylvinylether, perfluoroethylvinylether or perfluoromethylvinylether, all based on the total weight of the PFA.

The fluoropolymer ETFE (ethylene tetrafluoroethylene copolymer) is generally a copolymer of ethylene and tetrafluoroethylene. Usually, ETFEs comprise from 15 weight percent to 25 weight percent of ethylene and from 75 weight percent to 85 weight percent of tetrafluoroethylene , more preferably from 15 weight percent to 20 weight percent of ethylene and from 80 weight percent to 85 weight percent of tetrafluoroethylene, based on the total weight of the ETFE.

Ethylene acrylate rubbers (AEM) are curable composition of copolymers of ethylene and alkyl (meth)acrylate containing at least 45 weight percent of said alkyl (meth)acrylate.

The term "curable" denotes a material that may be cross-linked through a chemical reaction or irradiation.

AEM may contain at least 45 weight percent of the alkyl (meth)acrylate, preferably of from 45 to 70 weight percent, more preferably of from 55 to 65 weight percent, based on the total weight.

The alkyl (meth)acrylate of the curable composition may be chosen among methyl (meth)acrylate, ethyl (meth)acrylate and butyl (meth)acrylate, and is preferably methyl (meth)acrylate.

Ethylene Acrylate Rubbers or AEMs are commercially available from DuPont under the trademarks VAMAC®.

The curable composition may be cured by any suitable means or by a curing agent, such as, for example chemical additives or radiation.

Section B which comprises a core of a thermoplastic polymer layer and one or more layer(s) of a protective polymer surrounding the thermoplastic polymer layer. The core of section B could be the same or different to the core in section A. Preferably, the core is the same in sections A and B. The one or more layer(s) of a protective polymer surrounding the thermoplastic polymer layer could be the same or different to the one or more layer(s) of a protective polymer surrounding the PCM layer of section A. Preferably, the one or more layer(s) of a protective polymer are the same in section A and B. The thermoplastic polymer layer comprises a thermoplastic polymer composition. The thermoplastic composition is made of any thermoplastic polymer or blend of thermoplastic polymer having a melting point at least 30°C higher than the melting point of the PCM. Preferred thermoplastic polymers are polyesters and polyamides. Particularly preferred are polyamides. Preferably, the one or more layer(s) of a protective polymer are the same in section A and B and the thermoplastic polymer layer is the same than the one or more layer(s) of a protective polymer. The one or more layer(s) of a protective polymer and the thermoplastic polymer layer preferably comprise a blend of polyamide and ionomer.

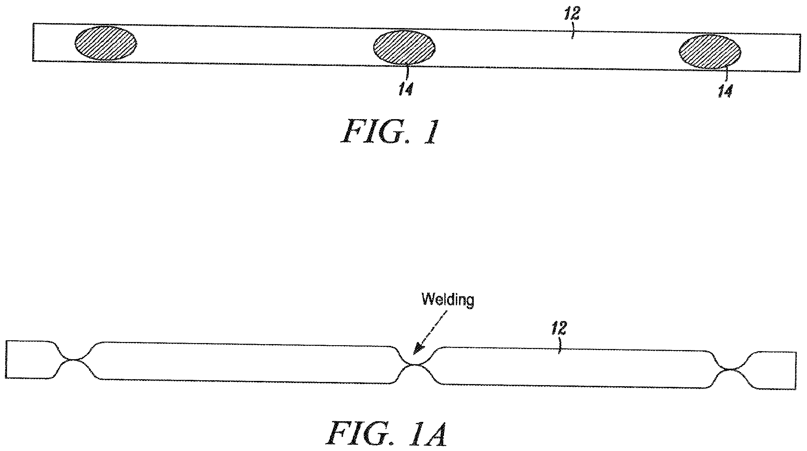

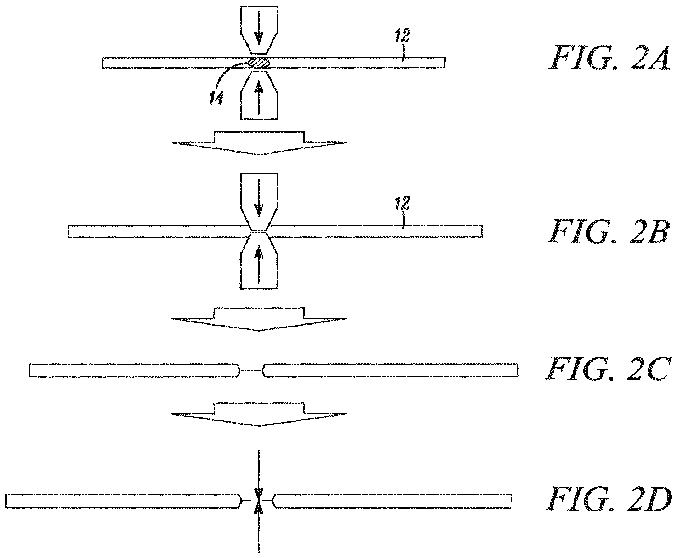

Referring to Figs 1 and 1A the relationship of location of section A 12 and section B 14 is illustrated. The function of section B is to provide a closing system to the cables for the PCM layer since the thermoplastic composition of the thermoplastic layer will not melt in the range of temperatures where the PCM can melt. Fig. 1 provides the thermoplastic section B 14 as a "bead" segregating the PCM layer, section A 12. Fig 1A provides an illustration of the finished cable having "closed" segregated sections A after closure at the location of the "bead"/section B 14. Closure can be accomplished by recognized methods including "heat welding" as provide in Figs 2A-D, wherein sections A and B are represented by the same reference numbers as in Figs 1 and 1A. Fig. 2D provides an illustration of "cutting" the cable at the designated area of closure (the location of the bead/section B after extrusion.

Preferably, in the cable of the present invention the thermoplastic polymer composition comprises a blend of ionomer and polyamide, preferably a blend of polyamide PA6,12 and ionomer, even more preferably a blend of 60 weight % polyamide PA6,12 and 40 weight % ionomer.

In one preferred embodiment, one layer of protective polymer is the same in section A and B and is the same than the thermoplastic layer and is made of a blend of an ionomer and a polyamide. In particular, the layers are made of a blend of an ionomer of an ethylene acid copolymer and a polyamide. Preferred polyamide is polyamide PA6,12.

Cables of the present invention can be made by extruding the PCM composition, the thermoplastic composition and/or the one or more protective layer(s) simultaneously or in sequence. More particularly, the PCM core (Section A) and the thermoplastic polymer core (Section B) can be extruded as provided in US Serial No. 62/492,318 entitled, "Composition And Methods For Coaxial Devices Including A Phase Change Material" included herein by reference in relevant part.

Various options exist for extruding pattern including:
a. Extruding sections A and B (with beads) and thereafter "cut" at sections B. The way sections A and B are extruded in a continuous way is by fixing beads at regular spaces onto a filament (most commonly Kevlar® or polyamide filament), extrude the PCM in between the beads and then extrude the protective layer on top of the entire cable. Welding might not be needed in that case if the hot molten protective layer adhere directly to the beads.
b. Extruding only section A, cut the cable, insert beads/plugs at the two ends and weld the protective layer to these beads. In this situation the cable will have 3 sections per cable ("B-A-B") ; once skilled in the art would recognize the invention is not restricted to this situation as it is not known how many sections are needed per cable part.
c. Extruding only section A, weld the protective layer on its own at regular distances and then cut the cable at the weld areas (Fig 2A without beads). The "B" sections become the weld areas and therefore there is no bead in that case.
d. Extruding only section A, cut the cable at regular distances, weld the protective layer on its own at their two ends. In this situation there are only 3 sections per cable part ("B-A-B") and the "B" sections do not contain any bead.

In a first embodiment when including a filament, yarn, strand or wire core with the PCM composition, the process for making the cable of the present invention comprises the steps of:
a) Providing a core consisting of a filament, yarn, strand or wire made of a natural or synthetic polymeric material or a metal and
b) Extruding a PCM composition onto the core and
c) extruding one or more layer(s) of a protective polymer onto the PCM composition
d) cut the cable in to parts,
e) remove some solid PCM at each end of these parts, leaving the one or more protective layer(s) and the core and
f) insert molten thermoplastic polymer composition into the consequent available spaces.
g) Cool down the thermoplastic polymer composition.

In a second embodiment, the process for making the cable of the present invention comprises the steps of:
a) Providing a core consisting of a filament, yarn, strand or wire made of a natural or synthetic polymeric material or a metal having a thermoplastic polymer layer disposed intermittently onto the core,
b) Extruding a PCM composition onto the portion of the core where no thermoplastic polymer layer is present and
c) extruding one or more layer(s) of a protective polymer onto the PCM composition and the thermoplastic polymer composition
Wherein the thermoplastic polymer layer had the same section than the die of the extruder.

The thermoplastic polymer layer can be disposed onto the core through knots, molding or by providing ball chain wherein the balls are made of the thermoplastic polymer composition.

In a third embodiment, the process for making the cable of the present invention comprises the steps of:
a) Providing a core consisting of a filament, yarn, strand or wire made of a natural or synthetic polymeric material or a metal and
b) Extruding in sequence a PCM composition and a thermoplastic polymer composition onto the of the core and
c) extruding one or more layer(s) of a protective polymer onto the PCM composition and the thermoplastic polymer composition.

The cables of the present invention can be used in several applications where thermal management is needed. While temperature management inside buildings is one of the most relevant applications in construction industries, the PCM composition of the present invention may also be used in automotive applications (for example for latent heat batteries, thermal management of fluids, thermal management of electrical batteries, ceiling and seats of vehicles); air filters in air ducts; air conditioners; transportation applications; food packaging (to keep food chilled or warm); medical packaging (for example organ or vaccine transportation); woven and nonwoven fabrics for garments, clothes and sport wear; footwear; tree wraps, hand grips (in tools, sporting goods and vehicles); bedding; carpets; wood composites; electric cables and plastic tubes for hot media including water.

A particularly preferred application is in the new latent heat batteries of cars where energy is stored in the cable of the present invention while the engine is in operation and where the cable are able to release the energy stored when necessary (for instance for start-up in cold environment or cold season). This energy release allows to reduce viscosity of lubricating oils and cooling fluids and ultimately leads to lower fuel consumption and reduced CO2 emission.

The following examples are provided to describe the invention in further detail. These examples, which set forth specific embodiments and a preferred mode presently contemplated for carrying out the invention, are intended to illustrate and not to limit the invention.

### EXAMPLES

### Example 1: Encapsulated PCM cable with PA6,12 beads and encapsulated in PA6,12-lonomer coating

In a first step, polyamide beads having a cross section diameter of 3.6 mm were attached every 23 cm with knots onto a polyamide filament having a diameter of 0.5 mm.

In a second step a powder of PCM having a melting point of 72°C (1,3 propanediol dibehanate) was fed into an extruder of a wire coating line and extruded at a temperature of 72°C and at a thickness of 1.55 mm onto above polyamide filament comprising polyamide beads. The produced cable ended up with a constant diameter of 3.6 mm and with sections of PCM between the beads.

In a third step, a melt blend of 60 weight percent PA6,12 and 40 weight percent ionomer (methacrylic acid copolymer neutralized with zinc) has been extruded at a temperature of 250°C using another extruder on same wire coating line in order to apply a coating of 200 µm onto the above 3.6 mm diameter cable. So the final encapsulated PCM cable ended up with a diameter of around 4 mm.

In a fourth step, 23 cm long samples have then been cut from the above cable at the level of the beads and therefore provided cable parts with closed ends.

These samples have then been exposed to following environments at a temperature of 100°C during 1 hour (to make sure the PCM was in liquid state):
- Air
- A mix of 50 % ethylene glycol + 50 % demineralized water
- A lubricating oil for cars (product "ATF-SP4(M)" from the company Michang Oil)

While the samples were still warm and therefore the PCM was still liquid, pressure has been applied onto the cable outer layer with fingers. The samples have then been carefully checked. No leak of PCM could be observed on any of the samples

The results are summarized in table 1.

### Example 2: Encapsulated PCM cable encapsulated in PA6,12-lonomer coating and with PA6 closings

In a first step, a powder of PCM having a melting point of 72°C (1,3 propanediol dibehanate) was fed into an extruder of a wire coating line and extruded at a temperature of 72°C and at a thickness of 1.67 mm onto a copper wire of 0.25 mm. The produced cable ended up with a constant diameter of 3.6 mm.

In a second step, a melt blend of 60 weight percent PA6,12 and 40 weight percent ionomer (methacrylic acid copolymer neutralized with zinc) has been extruded at a temperature of 250°C using another extruder on same wire coating line in order to apply a coating of 200 µm onto the above 3.6 mm diameter cable. So the final encapsulated PCM cable ended up with a diameter of around 4 mm.

In a third step, 23 cm long parts have then been cut from the above cable.

In a fourth step, 5 mm of solid PCM have been removed at each end of the 23 cm parts using a drill bit and molten PA6 has then been inserted in the consequent available spaces. This provided cable parts with closed ends.

These samples have then been exposed to following environments at a temperature of 100°C during 1 hour (to make sure the PCM was in liquid state):
- Air
- A mix of 50 % ethylene glycol + 50 % demineralized water
- A lubricating oil for cars (product "ATF-SP4(M)" from the company Michang Oil)

While the samples were still warm and therefore the PCM was still liquid, pressure has been applied onto the cable outer layer with fingers. The samples have then been carefully checked. No leak of PCM could be observed on any of the samples.

The results are summarized in Table 2.

**Table 1**

| PCM leaking result after 1 hour at 100°C | | | |
|---|---|---|---|
| Environment | Air | Ethylene glycol | Lubricating oil |
| PCM leak | None | None | None |

**Table 2**

| PCM leaking result after 1 hour at 100°C | | | |
|---|---|---|---|
| Environment | Air | Ethylene glycol | Lubricating oil |
| PCM leak | None | None | None |

While certain of the preferred embodiments of this invention have been described and specifically exemplified above, it is not intended that the invention be limited to such embodiments. Various modifications may be made without departing from the scope and spirit of the invention, as set forth in the following claims.

The following represents preferred items of the present invention:
1. A cable comprising at least two sections wherein a first section A of the cable comprises a core, a PCM layer surrounding the core and one or more layer(s) of a protective polymer surrounding the PCM layer and a section B comprising a core, a thermoplastic polymer layer and one or more layer(s) of a protective polymer surrounding the thermoplastic polymer layer wherein
   a) the PCM layer consists of a PCM composition,
   b) the core consists of a filament, yarn, strand or wire made of a natural or synthetic polymeric material or a metal, and
   c) the thermoplastic polymer layer consists of a thermoplastic polymer composition.
2. The item cable of item 1 wherein the PCM composition has a latent heat between 100 and 300 J/g.
3. The cable of item 1 wherein the cable has more than two sections and is made of the alternance of sections A and B.
4. The cable of any preceding items wherein sections B are present at both end of the cable.
5. The cable of any preceding items wherein the core is the same in section A and in section B and the one or more layer(s) of a protective polymer surrounding the PCM layer and the thermoplastic polymer layer is the same in section A and in section B.
6. The cable of any preceding items wherein the length of section A is longer than the length of section B.
7. The cable of any preceding items wherein the PCM composition comprises paraffin waxes, fatty acids, fatty acids esters or a combination thereof and optionally an ethylene copolymer.
8. The cable of any preceding items wherein the filament, yarn, strand or wire is made of polyamide.
9. The cable of any preceding items comprising two layers of a protective polymer wherein the first layer is made of a blend of ionomer and polyamide and the second layer is made of a polymer selected from the group consisting of grafted or non-grafted polypropylene homopolymer, grafted or non-grafted polypropylene copolymer, perfluoro ethylene-propylene (FEP), perfluoroalkoxy alkane (PFA), ethylene tetrafluoroethylene (ETFE) and/or ethylene acrylate rubber (AEM).
10. The cable of any preceding items wherein the thermoplastic polymer composition comprises a blend of ionomer and polyamide, preferably a blend of PA6,12 and ionomer.
11. The cable of any preceding items wherein the thermoplastic polymer composition and at least one layer of protective polymer comprise a blend of ionomer and polyamide, preferably a blend of PA6,12 and ionomer.
12. The cable of any preceding items wherein the one or more layer(s) of a protective polymer have a thickness of between 50 to 600 µm.
13. The cable of any preceding items wherein the amount of PCM is at least 70 weight percent based on the total weight of the cable.
14. The cable of any of the preceding items wherein the cable has a diameter of 3 to 6 mm.
15. The use of the cable of any of the preceding items in thermal management.
16. The use of the cable of any preceding items in the automotive and construction industries.
17. The use of the cable of any preceding items in electrical and heat batteries.
18. A cable comprising at least two sections wherein a first section A of the cable comprises a PCM core and one or more layer(s) of a protective polymer surrounding the PCM core and a section B comprising a thermoplastic polymer core and one or more layer(s) of a protective polymer surrounding the thermoplastic polymer core.
19. The cable of item 18 made by the process comprising the steps of simultaneously extruding a thermoplastic polymer encapsulation layer defining a hollowed area and filling the hollowed area with PCM composition in liquid form.
20. The process of item 19 further comprising sealing the protective polymer to define alternating segments of thermoplastic layer and PCM composition.
21. The process of item 20, further comprising cutting the cable at each sealed position of the thermoplastic layer.
22. The use of the cable made by the process of item 20 or 21 in thermal management.
23. The use of the cable made by the process of item 20 or 21 in the automotive and construction industries.
24. The use of the cable made by the process of item 20 or 21 in electrical and heat batteries.

## Claims

1. A cable comprising at least two sections wherein a first section A of the cable comprises a PCM core and one or more layer(s) of a protective polymer surrounding the PCM core and a section B comprising a thermoplastic polymer core and one or more layer(s) of a protective polymer surrounding the thermoplastic polymer core.

2. The cable of claim 1 made by a process comprising the step of simultaneously extruding a thermoplastic polymer encapsulation layer defining a hollowed area and filling the hollowed area with a PCM composition in liquid form.

3. The cable of claim 2 wherein the process further comprises the step of sealing the protective polymer to define alternating segments of thermoplastic layer and PCM composition.

4. The cable of claim 3 wherein the process further comprises the step of cutting the cable at each sealed position of the thermoplastic layer.

5. The cable of claim 1 or 2 wherein the process further comprises the step of cutting the cable into parts, removing some PCM at each end of these parts, inserting molten thermoplastic polymer composition into the consequently available spaces and cooling down the thermoplastic polymer composition.

6. The cable of any preceding claim wherein the PCM composition has a latent heat between 100 and 300 J/g.

7. The cable of any preceding claims wherein the PCM composition comprises paraffin waxes, fatty acids, fatty acids esters or a combination thereof and optionally an ethylene copolymer.

8. The cable of any preceding claims comprising two layers of a protective polymer wherein the first layer is made of a blend of ionomer and polyamide and the second layer is made of a polymer selected from the group consisting of grafted or non-grafted polypropylene homopolymer, grafted or non-grafted polypropylene copolymer, perfluoro ethylene-propylene (FEP), perfluoroalkoxy alkane (PFA), ethylene tetrafluoroethylene (ETFE) and/or ethylene acrylate rubber (AEM),

9. The cable of any preceding claims wherein the thermoplastic polymer composition comprises a blend of ionomer and polyamide, preferably a blend of PA6,12 and ionomer and/or
wherein the thermoplastic polymer composition and at least one layer of protective polymer comprise a blend of ionomer and polyamide, preferably a blend of PA6,12 and ionomer.

10. The cable of any preceding claims wherein the one or more layer(s) of a protective polymer have a thickness of between 50 to 600 µm.

11. The cable of any preceding claims wherein the amount of PCM is at least 70 weight percent based on the total weight of the cable.

12. The cable of any of the preceding claims wherein the cable has a diameter of 3 to 6 mm.

13. A process for making a cable comprising the steps of:
a) providing a core consisting of a filament, yarn, strand or wire made of a natural or synthetic polymeric material or a metal;
b) extruding a PCM composition onto the core;
c) extruding one or more layer(s) of a protective polymer onto the PCM composition;
d) cutting the cable in to parts:
e) removing some solid PCM at each end of these parts, leaving the one or more protective layer(s) and the core;
f) inserting molten thermoplastic polymer composition into the consequent available spaces; and
g) cooling down the thermoplastic polymer composition.

14. A cable obtainable by the process of claim 11.

15. Use of the cable of any one of claims 1 to 10 or 12 in thermal management and/or in the automotive and construction industries and/or in electrical and heat batteries.
